# EUROPEAN PATENT SPECIFICATION

(11) **EP 4 347 243 B1**
(45) Date of publication and mention of the grant of the patent: **21.05.2025**
(21) Application number: 22722904.4
(22) Date of filing: 04.05.2022
(51) Int. Cl.: B32B 5/02, B32B 27/08, B32B 27/12, B32B 27/30, B32B 27/34, B32B 27/36

(54) **MULTILAYER FILM FOR APPLYING LABELS ON ITEMS OF CLOTHING**
MEHRSCHICHTFOLIE ZUM AUFBRINGEN VON ETIKETTEN AUF KLEIDUNGSSTÜCKE
FILM MULTICOUCHE POUR APPLIQUER DES ÉTIQUETTES SUR DES VÊTEMENTS

(30) Priority: 03.06.2021 IT 202100014438
(43) Date of publication of application: 10.04.2024
(73) Proprietor: Framis Italia S.p.A., 20083 Gaggiano (MI) (IT)
(72) Inventor: CARRARO, Matteo, 20083 Frazione Vigano, Gaggiano, Milano (IT)
(74) Representative: Pulieri, Gianluca Antonio
(86) International application number: PCT/IB2022/054114
(87) International publication number: WO 2022/254263

(56) References cited:
- US-A1- 2018 345 625
- US-A1- 2020 384 797
- US-B2- 10 870 255

## Description

The present invention relates to a multilayer film for applying labels to a fabric support; in particular, the present invention relates to a multilayer film having barrier properties for preventing or considerably limiting the migration of pigments from the fabric support to the label.

In the field of packaging fabric items, and in the field of packaging sports clothing items in particular, such as jerseys, T-shirts, jackets, sweatshirts, pants, shorts, vests and the like, it is very important for a label, for example a logo, a number or an image - often the reason for which the consumer purchased the item in question - to remain integral also after several washes.

One of the most felt problems in the field is the label changing color, especially when a label is white; such a phenomenon, which may be observed after the item of clothing has been washed a few times, is due to the migration of the pigments from the fabric to the label and results in the formation of pink or grey rings on the white label. As an example, the document US 10 870 255 B2 gives an example of a multilayer film label.

Usually, the fabric of sports clothing items is made of polyester, while the labels include a surface layer made of thermoplastic polyurethane and an adhesive film which allows the surface layer to be glued to the fabric. The pigments used for coloring the fabric migrate from the polyester to the polyurethane due to the continuous washes, especially due to the effect of the temperature, thus forming the mentioned rings.

To obviate such a problem, some known solutions provide using a film provided with an EVOH layer, which limits the migration of the pigments. However, such a solution has not proven to be effective because the label tends to detach from the fabric after a few washes due to the unsatisfactory adhesive properties of the film.

It is the object of the present invention to make a multilayer film for applying labels on a fabric item which meets the needs of the field and overcomes the mentioned drawbacks. Such an object is achieved by a film according to claim 1. The dependent claims identify further advantageous embodiments of the invention.

The features and advantages of the multilayer film according to the present invention will become apparent from the following description, given by way of nonlimiting example, according to the accompanying drawings, in which:

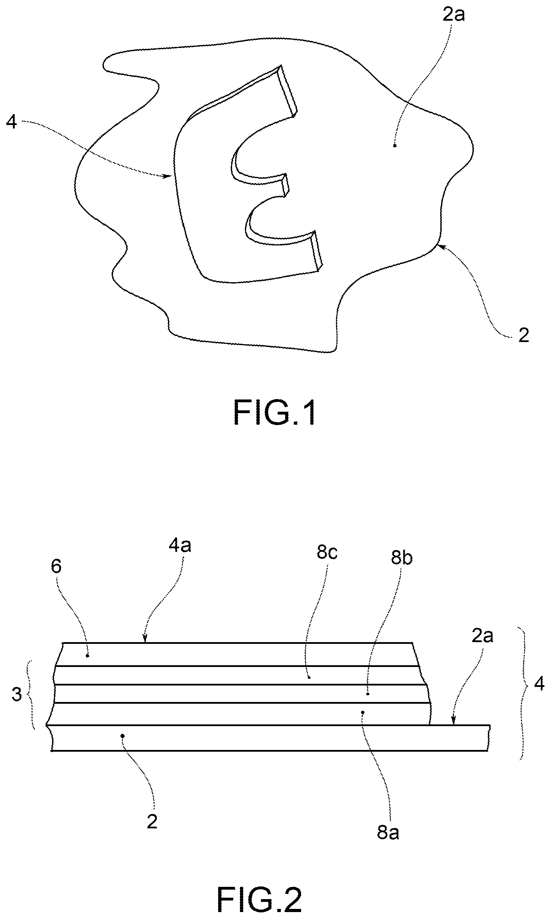

- Figure 1 shows a portion of an item of clothing with a label according to an embodiment of the present invention;
- Figure 2 diagrammatically shows the layered structure of a label comprising a multilayer film according to an embodiment of the present invention;

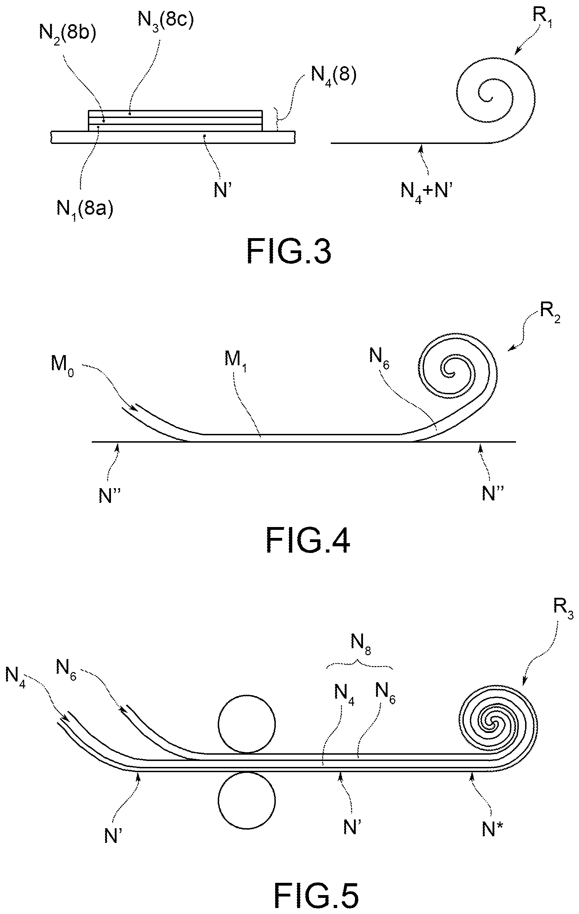

- Figures 3, 4 and 5 diagrammatically show some production steps of a label strip having the structure of the label according to the present invention.

With reference to the drawings in the accompanying Figures, a fabric support, for example an item of clothing such as a T-shirt, pants, a jacket and the like, is shown by numeral 2. The fabric is predominantly made of polyester or polyamide or acrylic or natural fibers, such as cotton or linen. Support 2 has an outer surface 2a.

A multilayer label 4 having an outer surface 4a is applied to support 2. Preferably, said label has a thickness between 90 and 170 microns, preferably equal to 150 microns, and a weight between 100 and 190 g/m², preferably equal to 170 g/m².

Preferably, label 4 consists of a surface layer 6 having the outer surface 4a, predominantly made of thermoplastic polyurethane (TPU), and a multilayer film 8 which adheres to the outer surface 2a of support 2.

Film 8 comprises a lower layer 8a made of copolyamide, which adheres to the outer surface 2a of support 2, a barrier layer 8b made of EVOH, overlapping and adhering to the lower layer 8a, and an upper layer 8c made of copolyamide, overlapping and adhering to the barrier layer 8b, which the surface layer 6 overlaps and adheres to.

For example, the lower layer and the upper layer are made of Pontacol (r), supplied by Pontacol AG, while the barrier layer is made of Soarnol (r), supplied by Mitsubishi Chemical Co.

For example, the lower layer and the upper layer have a thickness between 40 and 50 microns, preferably equal to 45 microns, and a weight between 40 and 60 g/m2, preferably equal to 50 g/m2. For example, the barrier layer has a thickness between 15 and 20 microns, preferably equal to 17 microns, and a weight between 10 and 30 g/m2, preferably equal to 20 g/m2.

Advantageously, said multilayer film is capable of considerably limiting or even preventing the migration of the pigments which color the fabric of support 2 towards the surface layer 6 while ensuring an excellent adhesion of the surface layer to the support.

For example, the test for detecting the pigment migration phenomenon is defined by Standard ISO 105-A01 Part A01, ISO 105-A02 Part A02, AATCC Procedure 2. According to such a test, the item of clothing to which the label to be tested is applied, is left in a boiler at a predefined temperature for a predefined time period, for example at 90°C for 24 hours or at 70°C for 48 hours. The sample is removed, the label is checked for rings and, using a comparative scale, the color is assigned a value from 5 to 1, where value 5 corresponds to the case when the two compared colors are identical and value 1 corresponds to the case when the two compared colors are very different.

The Applicant, by means of some tests carried out according to the aforesaid standard performed on samples obtained according to the invention, kept in a boiler at 90°C for 24 hours, has identified a value ≥ 4, that is a color of the tested sample which is practically identical to the original one.

In order to produce the multilayer film according to the present invention, a lower strip N1, having the features of the lower layer 8a, is co-extruded on a non-stick strip N', for example made of siliconized paper, together with a barrier strip N2, having the features of the barrier layer 8b, and an upper strip N3, having the features of the upper layer 8c. Thereby, a multilayer strip N4 having the features of the multilayer film 4, on non-stick strip N', wound into a first roll R1, is obtained.

Moreover, a first material M0 is spread over a non-stick strip N'', for example siliconized paper; the solvent present in material M0 evaporates, leaving a material M1 corresponding to the material of the surface layer 6; once the material M1 has cooled, a surface strip N6, having the features of the surface layer 6, is detached from the non-stick strip N'' and wound onto a core, thus forming a roll R2.

Then the rolls R2 and R1 are unwound and the surface strip N6 is rolled onto the multilayer strip N4 supported by the non-stick strip N', at higher temperatures than the softening temperature, passing over a cylinder or between calenders, with predetermined rolling pressures and speed, thus obtaining a composite strip N* in which a label strip N8 having the features of label 4 is supported by the non-stick strip N'. The composite strip N* is wound into a roll R3, preferably on a cardboard core.

After a predefined time period, for example between 24 and 48 hours, the composite strip N* is subjected to an inspection to identify any visible defects such as lines, dirt, etc. Preferably, the label strip N8 is separated from the non-stick strip N' and rewound onto a reel.

The object of the marketing is, for example, a reel consisting of the wound label strip N8 (from which the labels were cut in the desired shape) or a reel consisting of the label strip N8 supported by a non-stick strip (especially for making a print and then cutting the label in the desired shape) or of a reel consisting of the label strip N8 coated by a polyester film (especially for carrying out laser cuts for making a logo).

Label 4 is applied to support 2 by means of hot pressing, for example at a temperature of the label and the support between 100°C and 160°C, preferably between 120° and 140°C, at a pressure between label and support between 4 and 8 bar, preferably equal to 6 bar, for a time period between 10 and 30 seconds, preferably equal to 20 seconds.

Innovatively, the multilayer film according to the present invention meets the needs of the field and overcomes the mentioned drawbacks because it considerably limits or prevents the migration of pigments from the fabric to the surface layer of the label while maintaining an excellent adhesion of the label to the fabric.

It is apparent that, in order to meet contingent needs, those skilled in the art may make changes to the multilayer film described above, all of which are contained within the scope of protection as defined by the following claims.

## Claims

1. A multilayer film (8) for applying a label (4) with a surface layer (6) to a fabric support (2) by means of hot pressing, comprising a lower layer (8a) adapted to adhere to the support (2), a barrier layer (8b) overlapping and adhering to the lower layer (8a) and an upper layer (8c) overlapping and adhering to the barrier layer (8b) and adapted to adhere to the surface layer (6), wherein the lower layer (8a) is predominantly made of copolyamide, the barrier layer (8b) is predominantly made of EVOH, and the upper layer (8c) is predominantly made of copolyamide.

2. A multilayer film according to claim 1, wherein the lower layer (8a) and the upper layer (8c) have a thickness between 40 and 50 microns, preferably equal to 45 microns, and the barrier layer (8b) has a thickness between 15 and 20 microns, preferably equal to 17 microns.

3. A multilayer film according to claim 1 or 2, wherein the lower layer (8a) and the upper layer (8c) each have a specific weight between 40 and 60 g/m2, preferably equal to 50 g/m2, and the barrier layer (8b) has a specific weight between 10 and 30 g/m², preferably equal to 20 g/m².

4. A label (4) adapted to be applied to a fabric support (2) by means of hot pressing, comprising:
- a multilayer film (8) according to any one of the preceding claims;
- a surface layer (6) overlapping and adhering to the upper layer (8c) of the multilayer film (8).

5. A label according to claim 4, wherein the surface layer (6) is predominantly made of thermoplastic polyurethane (TPU).

6. A label according to claim 4 or 5, having a thickness between 90 and 170 microns, preferably equal to 150 microns.

7. A label according to any one of claims 4 to 6, having a specific weight between 100 and 190 g/m², preferably equal to 170 g/m².

8. An assembly, for example an item of clothing, comprising:
- a fabric support (2);
- a label (4) according to any of claims 4 to 7, wherein the lower layer (8a) of the label adheres to the support (2).

9. An assembly according to claim 8, wherein the support is predominantly made of polyester or polyamide or acrylic or natural fibers, such as cotton or linen.

10. A process for making a multilayer film (4) for applying a label (4) having a surface layer (6) to a fabric support (2) by means of hot pressing, comprising the step of co-extruding a lower layer (8a) adapted to adhere to the support (2), a barrier layer (8b) overlapping and adhering to the lower layer (8a) and an upper layer (8c) overlapping and adhering to the barrier layer (8b) and adapted to adhere to the surface layer (6), wherein the lower layer (8a) is predominantly made of copolyamide, the barrier layer (8b) is predominantly made of EVOH, and the upper layer (8c) is predominantly made of copolyamide.

11. A process for making a label (4) adapted to be applied to a fabric support (2) by means of hot pressing, comprising the steps of:
- providing a multilayer film (4) comprising a lower layer (8a) adapted to adhere to the support (2), a barrier layer (8b) overlapping and adhering to the lower layer (8a) and an upper layer (8c) overlapping and adhering to the barrier layer (8b), wherein the lower layer (8a) is predominantly made of copolyamide, the barrier layer (8b) is predominantly made of EVOH, and the upper layer (8c) is predominantly made of copolyamide;
- hot rolling the surface layer (6) to the upper layer (8c).

12. A process for making an assembly, for example an item of clothing, comprising the steps of:
- providing a label (4) comprising:
i) a multilayer film (8) comprising a lower layer (8a) adapted to adhere to the support (2), a barrier layer (8b) overlapping and adhering to the lower layer (8a) and an upper layer (8c) overlapping and adhering to the barrier layer (8b) and adapted to adhere to the surface layer (6), wherein the lower layer (8a) is predominantly made of copolyamide, the barrier layer (8b) is predominantly made of EVOH, and the upper layer (8c) is predominantly made of copolyamide; and
ii) a surface layer (6) overlapping and adhering to the upper layer (8c) of the multilayer film (8);
- providing a fabric support (2);
- hot pressing the label (4) on the support (2).

## Patentansprüche

1. Mehrschichtfolie (8) zum Aufbringen, mittels Heißpressen, eines Etiketts (4) mit einer Oberflächenschicht (6) auf einen Stoffträger (2), umfassend eine untere Schicht (8a), die so ausgelegt ist, dass sie an dem Träger (2) haftet, eine Barriereschicht (8b), die die untere Schicht (8a) überdeckt und daran haftet, und eine obere Schicht (8c), die die Barriereschicht (8b) überdeckt und daran haftet und so ausgelegt ist, dass sie an der Oberflächenschicht (6) haftet, wobei die untere Schicht (8a) vorwiegend aus Copolyamid hergestellt ist, die Barriereschicht (8b) vorwiegend aus EVOH hergestellt ist und die obere Schicht (8c) vorwiegend aus Copolyamid hergestellt ist.

2. Mehrschichtfolie nach Anspruch 1, wobei die untere Schicht (8a) und die obere Schicht (8c) eine Dicke zwischen 40 und 50 Mikrometer, vorzugsweise gleich 45 Mikrometer, aufweisen und die Barriereschicht (8b) eine Dicke zwischen 15 und 20 Mikrometer, vorzugsweise gleich 17 Mikrometer, aufweist.

3. Mehrschichtfolie nach Anspruch 1 oder 2, wobei die untere Schicht (8a) und die obere Schicht (8c) jeweils ein spezifisches Gewicht zwischen 40 und 60 g/m², vorzugsweise gleich 50 g/m², aufweisen und die Barriereschicht (8b) ein spezifisches Gewicht zwischen 10 und 30 g/m², vorzugsweise gleich 20 g/m², aufweist.

4. Etikett (4), das dafür ausgelegt ist, mittels Heißpressen auf einen Stoffträger (2) aufgebracht zu werden, umfassend:
- eine Mehrschichtfolie (8) nach einem beliebigen der vorhergehenden Ansprüche;
- eine Oberflächenschicht (6), die die obere Schicht (8c) der Mehrschichtfolie (8) überdeckt und daran haftet.

5. Etikett nach Anspruch 4, wobei die Oberflächenschicht (6) vorwiegend aus thermoplastischem Polyurethan (TPU) hergestellt ist.

6. Etikett nach Anspruch 4 oder 5, das eine Dicke zwischen 90 und 170 Mikrometer, vorzugsweise gleich 150 Mikrometer, aufweist.

7. Etikett nach einem beliebigen der Ansprüche 4 bis 6, das ein spezifisches Gewicht zwischen 100 und 190 g/m², vorzugsweise gleich 170 g/m², aufweist.

8. Anordnung, beispielsweise ein Kleidungsstück, umfassend:
- einen Stoffträger (2);
- ein Etikett (4) nach einem beliebigen der Ansprüche 4 bis 7, wobei die untere Schicht (8a) des Etiketts an dem Träger (2) haftet.

9. Anordnung nach Anspruch 8, wobei der Träger vorwiegend aus Polyester oder Polyamid oder Acryl oder Naturfasern, wie Baumwolle oder Leinen, hergestellt ist.

10. Verfahren zur Herstellung einer Mehrschichtfolie (4) zum Aufbringen eines Etiketts (4), das eine Oberflächenschicht (6) aufweist, mittels Heißpressen auf einen Stoffträger (2), umfassend den Schritt des Koextrudierens einer unteren Schicht (8a), die so ausgelegt ist, dass sie an dem Träger (2) haftet, einer Barriereschicht (8b), die die untere Schicht (8a) überdeckt und daran haftet, und einer oberen Schicht (8c), die die Barriereschicht (8b) überdeckt und daran haftet und so ausgelegt ist, dass sie an der Oberflächenschicht (6) haftet, wobei die untere Schicht (8a) vorwiegend aus Copolyamid hergestellt ist, die Barriereschicht (8b) vorwiegend aus EVOH hergestellt ist und die obere Schicht (8c) vorwiegend aus Copolyamid hergestellt ist.

11. Verfahren zur Herstellung eines Etiketts (4), das dafür ausgelegt ist, mittels Heißpressen auf einen Stoffträger (2) aufgebracht zu werden, umfassend die folgenden Schritte:
- Bereitstellen einer Mehrschichtfolie (4), die eine untere Schicht (8a), die so ausgelegt ist, dass sie an dem Träger (2) haftet, eine Barriereschicht (8b), die die untere Schicht (8a) überdeckt und daran haftet, und eine obere Schicht (8c), die die Barriereschicht (8b) überdeckt und daran haftet, umfasst, wobei die untere Schicht (8a) vorwiegend aus Copolyamid hergestellt ist, die Barriereschicht (8b) vorwiegend aus EVOH hergestellt ist und die obere Schicht (8c) vorwiegend aus Copolyamid hergestellt ist;
- Warmwalzen der Oberflächenschicht (6) an die obere Schicht (8c).

12. Verfahren zur Herstellung einer Anordnung, beispielsweise eines Kleidungsstücks, das die folgenden Schritte umfasst:
- Bereitstellen eines Etiketts (4), das Folgendes umfasst:
i) eine Mehrschichtfolie (8), die eine untere Schicht (8a), die so ausgelegt ist, dass sie an dem Träger (2) haftet, eine Barriereschicht (8b), die die untere Schicht (8a) überdeckt und daran haftet, und eine obere Schicht (8c), die die Barriereschicht (8b) überdeckt und daran haftet und so ausgelegt ist, dass sie an der Oberflächenschicht (6) haftet, umfasst, wobei die untere Schicht (8a) vorwiegend aus Copolyamid hergestellt ist, die Barriereschicht (8b) vorwiegend aus EVOH hergestellt ist und die obere Schicht (8c) vorwiegend aus Copolyamid hergestellt ist; und
ii) eine Oberflächenschicht (6), die die obere Schicht (8c) der Mehrschichtfolie (8) überdeckt und daran haftet;
- Bereitstellen eines Stoffträgers (2);
- Heißpressen des Etiketts (4) auf den Träger (2).

## Revendications

1. Film multicouche (8) pour appliquer une étiquette (4) ayant une couche de surface (6) sur un support de tissu (2) par pressage à chaud, comprenant une couche inférieure (8a) adaptée pour adhérer au support (2), une couche barrière (8b) chevauchant la couche inférieure (8a), et adhérant à celle-ci, et une couche supérieure (8c) chevauchant la couche barrière (8b), et adhérant à celle-ci, et adaptée pour adhérer à la couche de surface (6), dans lequel la couche inférieure (8a) est principalement constituée de copolyamide, la couche barrière (8b) est principalement constituée de EVOH, et la couche supérieure (8c) est principalement constituée de copolyamide.

2. Film multicouche selon la revendication 1, dans lequel la couche inférieure (8a) et la couche supérieure (8c) ont une épaisseur comprise entre 40 et 50 microns, de préférence égale à 45 microns, et la couche barrière (8b) a une épaisseur comprise entre 15 et 20 microns, de préférence égale à 17 microns.

3. Film multicouche selon la revendication 1 ou 2, dans lequel la couche inférieure (8a) et la couche supérieure (8c) ont chacune un poids spécifique compris entre 40 et 60 g/m2, de préférence égal à 50 g/m2, et la couche barrière (8b) a un poids spécifique compris entre 10 et 30 g/m², de préférence égal à 20 g/m².

4. Étiquette (4) adaptée pour être appliquée sur un support de tissu (2) par pressage à chaud, comprenant :
- un film multicouche (8), selon l'une quelconque des revendications précédentes ;
- une couche de surface (6) chevauchant la couche supérieure (8c) du film multicouche (8), et adhérant à celle-ci.

5. Étiquette selon la revendication 4, dans laquelle la couche de surface (6) est principalement constituée de polyuréthane thermoplastique (TPU).

6. Étiquette selon la revendication 4 ou 5, ayant une épaisseur comprise entre 90 et 170 microns, de préférence égale à 150 microns.

7. Étiquette selon l'une quelconque des revendications 4 à 6, ayant un poids spécifique compris entre 100 et 190 g/m², de préférence égal à 170 g/m².

8. Ensemble, par exemple un vêtement, comprenant :
- un support de tissu (2) ;
- une étiquette (4) selon l'une quelconque des revendications 4 à 7, dans lequel la couche inférieure (8a) de l'étiquette adhère au support (2).

9. Ensemble selon la revendication 8, dans lequel le support est principalement constitué de polyester ou polyamide ou fibres acryliques ou naturelles, telles que du coton ou lin.

10. Procédé de fabrication d'un film multicouche (4) pour appliquer une étiquette (4) ayant une couche de surface (6) sur un support de tissu (2) par pressage à chaud, comprenant l'étape de co-extrusion d'une couche inférieure (8a) adaptée pour adhérer au support (2), d'une couche barrière (8b) chevauchant la couche inférieure (8a), et adhérant à celle-ci, et d'une couche supérieure (8c) chevauchant la couche barrière (8b), et adhérant à celle-ci, et adaptée pour adhérer à la couche de surface (6), dans lequel la couche inférieure (8a) est principalement constituée de copolyamide, la couche barrière (8b) est principalement constituée de EVOH, et la couche supérieure (8c) est principalement constituée de copolyamide.

11. Procédé de fabrication d'une étiquette (4) adaptée pour être appliquée sur un support de tissu (2) par pressage à chaud, comprenant les étapes consistant à :
- fournir un film multicouche (4) comprenant une couche inférieure (8a) adaptée pour adhérer au support (2), une couche barrière (8b) chevauchant la couche inférieure (8a), et adhérant à celle-ci, et une couche supérieure (8c) chevauchant la couche barrière (8b), et adhérant à celle-ci, dans lequel la couche inférieure (8a) est principalement constituée de copolyamide, la couche barrière (8b) est principalement constituée de EVOH, et la couche supérieure (8c) est principalement constituée de copolyamide ;
- laminer à chaud la couche de surface (6) sur la couche supérieure (8c).

12. Procédé de fabrication d'un ensemble, par exemple un vêtement, comprenant les étapes consistant à :
- fournir une étiquette (4) comprenant :
i) un film multicouche (8) comprenant une couche inférieure (8a) adaptée pour adhérer au support (2), une couche barrière (8b) chevauchant la couche inférieure (8a), et adhérant à celle-ci, et une couche supérieure (8c) chevauchant la couche barrière (8b), et adhérant à celle-ci, et adaptée pour adhérer à la couche de surface (6), dans lequel la couche inférieure (8a) est principalement constituée de copolyamide, la couche barrière (8b) est principalement constituée de EVOH, et la couche supérieure (8c) est principalement constituée de copolyamide ; et
ii) une couche de surface (6) chevauchant la couche supérieure (8c) du film multicouche (8), et adhérant à celle-ci ;
- fournir un support de tissu (2) ;
- presser à chaud l'étiquette (4) sur le support (2).
